# EUROPEAN PATENT SPECIFICATION

(11) **EP 0 652 546 B1**
(45) Date of publication and mention of the grant of the patent: **28.01.1998**
(21) Application number: 94117002.9
(22) Date of filing: 27.10.1994
(51) Int. Cl.: G09G 3/36

(54) **Matrix liquid crystal display having function to correct viewing angle**
Matrix-Flüssigkristallanzeige mit einer Funktion zur Korrektur des Sichtwinkels
Dispositif d'affichage matriciel à cristaux liquides avec fontion pour corriger l'angle d'observation

(30) Priority: 04.11.1993 JP 275116/93
(43) Date of publication of application: 10.05.1995
(73) Proprietor: HITACHI, LTD., Chiyoda-ku, Tokyo 101 (JP); Hitachi Device Engineering Co., Ltd., Mobara-shi Chiba-ken (JP)
(72) Inventor: Owaki, Yoshio, Mobara-shi, Chiba-ken (JP); Kawamura, Hideo, Chosei-gun, Chiba-ken (JP); Ohwada, Junichi, Mobara-shi, Chiba-ken (JP); Sato, Yukihiro, Chiba-ken (JP)
(74) Representative: Beetz & Partner Patentanwälte

(56) References cited:
- EP-A- 0 514 033
- EP-A- 0 588 019
- DISPLAYS, vol.13, no.1, 1992, GUILDFORD GB pages 5 - 10 TAKAHASHI ET AL. 'Multimedia projector using 720x480 pixel a-Si TFT-LCD and a high speed analogue driver LSI.'
- PATENT ABSTRACTS OF JAPAN vol. 17, no. 543 (P-1622) 29 September 1993 & JP-A-05 150 735 (MATSUSHITA ELECTRIC INDUSTRIAL CO.) 18 June 1993

## Description

### Background of the Invention

### (1) Field of the Invention

The present invention relates to a liquid crystal display and, more particularly, to a liquid crystal display to be used in a projection type display for projecting a liquid crystal display panel in an enlarged scale, that is, a liquid crystal display having a function to correct that luminance difference in the vertical direction of the screen, which is caused by the viewing angle.

### (2) Description of the Prior Art

In the liquid crystal display of the prior art, the polarities of the voltages to be applied to the liquid crystal are inverted for each field and in adjoining video signal lines. Moreover, the phenomenon that the luminance changes in the viewing direction of the display panel is prevented by changing the display luminance in the vertical scanning direction, i.e., by correcting the so-called "viewing angle characteristics".

Specifically, a correcting signal is generated, for example, by differentiating and integrating the liquid crystal applied signals having their polarities inverted for each one field and is applied to the liquid crystal of each scanning line.

This concept of the prior art is disclosed in Patent Publications such as U.S.P. 4,906,984 and Japanese Patent Laid-Open No. 59-220,797 (on December 12, 1984).

### Summary of the Invention

In the prior art described above, the display characteristics such as the flicker of the display screen or the crosstalk to be produced vertically of the screen can be improved by inverting the polarities of the liquid crystal applied voltages for every scanning lines. In case, however, a viewing angle correcting signal is to be generated merely by differentiating and integrating the signals having their polarities changing for every scanning lines, the viewing angle characteristics cannot be corrected because the effective voltage values of the liquid crystal applied signals will not change for every scanning lines. Moreover, no prior art has succeeded in specifically disclosing the concept of inverting the polarities of the liquid crystal applied voltages for every scanning lines by using the signal for correcting the viewing angle.

On the basis of this background, therefore, the present invention has been conceived and has an object to provide a liquid crystal display for changing the polarities of the liquid crystal applied voltages for every scanning lines, which display has its display characteristics such as the flicker in the display screen or the crosstalk in the vertical direction of the screen improved by disclosing a specific liquid crystal display driver enabled to invert the polarities of the liquid crystal applied voltages for every scanning lines by using a signal for correcting the viewing angle characteristics.

In order to achieve this object, according to the present invention, there is provided a liquid crystal display for inverting the polarities of voltage to be applied to a liquid crystal for every scanning lines, which display comprises: means (10) for generating a viewing angle correcting signal (VS) on the basis of a vertical synchronizing signal (VSYNC) to be generated by a pulse at the scanning start of one field; arithmetic means (12) capacity-coupled to the viewing angle correcting signal generating means (10), for generating a plurality of kinds of reference voltages (VC+VS+VDC, VC-VS-VDC) around a predetermined central voltage (VC) by correcting a predetermined amplitude voltage (VDC) with said viewing angle correcting signal (VS); means (14) for generating two kinds of viewing angle correcting reference voltages (VU, VL) having their polarities inverted from each other, from the plurality of reference voltages outputted from said arithmetic means and an alternating signal (M); and means (B, VC, He, Ho) for generating a video signal (X) from the viewing angle correcting reference voltages.

In the liquid crystal display thus constructed, the viewing angle correcting signal is generated on the basis of the vertical synchronizing signal which is generated by the pulse at the scanning start of one field.

As a result, even if said viewing angle correcting signal is then converted into an AC signal, this AC signal is allowed to function as it is without deteriorating the viewing angle correcting function.

Since said AC conversions can be effected such that the polarities are changed for every scanning lines, the display characteristics such as the flicker on the display screen or the crosstalk in the vertical direction of the screen can be improved while correcting the viewing angle characteristics.

From these effects, the viewing angle characteristics can be corrected while premising that the polarities of the liquid crystal applied voltages are changed for every scanning lines.

The foregoing and other objects, advantages, manner of operation and novel features of the present invention will be understood from the following detailed description when read in connection with the accompanying drawings.

### Brief Description of the Drawings

Fig. 1 is a circuit diagram showing one embodiment of the front portion of liquid crystal display driver according to the present invention;
Fig. 2 is a circuit diagram showing a specific construction of the circuit shown in Fig. 1;
Figs. 3(a) to 3(c) are waveform diagrams illustrating the operations of the circuit shown in Fig. 1;
Fig. 4 is a circuit diagram showing one embodiment of the rear portion of the liquid crystal display driver according to the present invention;
Fig. 5 is a schematic circuit diagram showing one embodiment of a liquid crystal display to which is applied the present invention;
Fig. 6 is an exploded perspective viewing showing one embodiment of the liquid crystal display to which is applied the present invention; and
Fig. 7 is an explanatory diagram showing one embodiment of a driver circuit board on which is mounted the liquid crystal display driver according to the present invention.

### Description of the Preferred Embodiments

Here will be described one embodiment of a liquid crystal display driver according to the present invention with reference to the accompanying drawings.

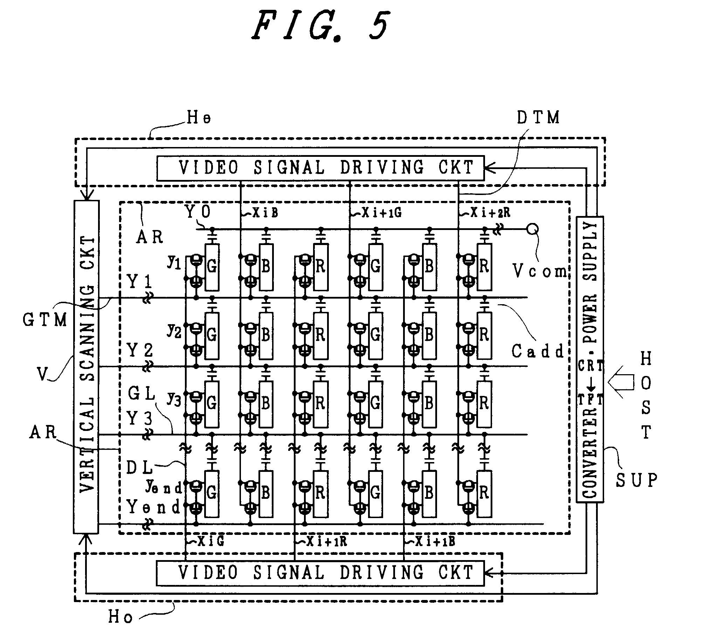

First of all, Fig. 5 is a circuit diagram of an equivalent circuit and its peripheral circuits of a display matrix portion of a liquid crystal display to which is applied the present invention. Fig. 5 is drawn to correspond to the actual geometric arrangement although it presents a circuit diagram. Letters AR designate a matrix array having a plurality of two-dimensionally arrayed pixels.

In Fig. 5, letter X designates video signal lines DL, to which are added suffixes G, B and R corresponding to green, blue and red pixels, respectively. Letter Y designates scanning signal lines GL, to which are added suffixes 1, 2, 3, - - -, and end in the timing sequence.

The video signal lines X (having their suffixes omitted) are alternately connected with an upper (or odd) video signal driver He and a lower (or even) video signal driver Ho. The scanning signal lines Y (having their suffixes omitted) are connected with a vertical scanning driver V.

Letters SUP designate a CRT → TFT converter for converting the CRT (i.e., Cathode Ray Tube) information coming from either a voltage source circuit for establishing a plurality of divided stable voltage sources from one voltage source a host (e.g., a host arithmetic processor) into the information for a TFT liquid crystal display.

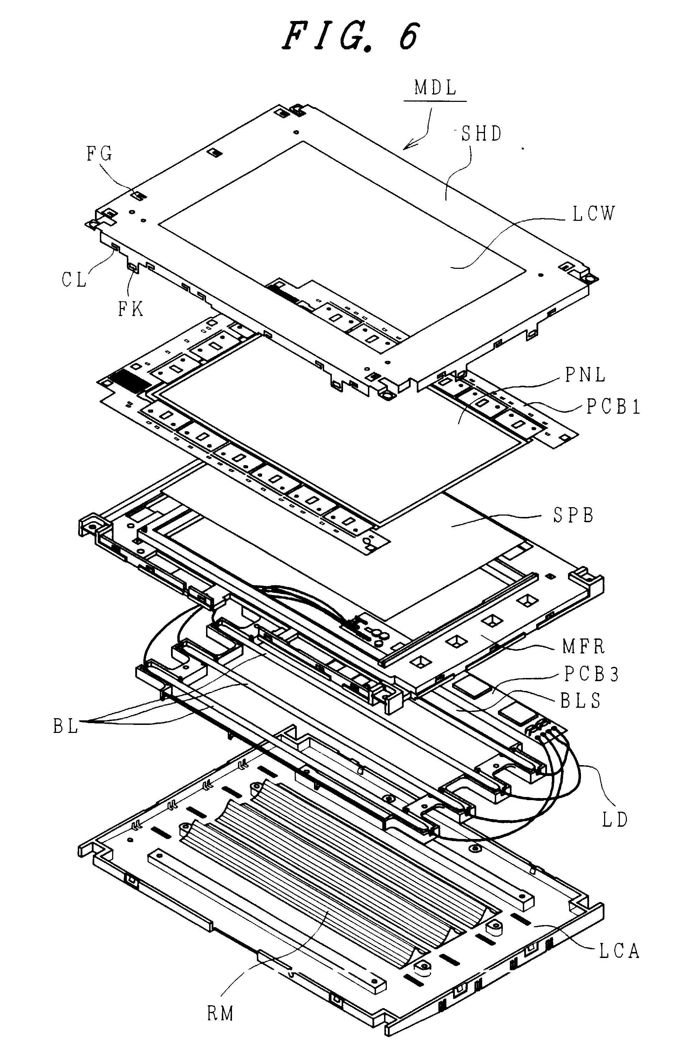

Fig. 6 is an exploded perspective viewing showing the individual components of a liquid crystal display module MDL.

Letters SHD designate a frame-shaped shield case (or metal frame) made of a metal sheet; letters LCW designate a liquid crystal window of the shield case; letters PNL designate a liquid crystal panel; letters SPB a scattering board; letters MFR a middle frame; letters BL cold fluorescent lamps for back light; letters BLS a back light supporter; and letters LCA a lower case. These components are stacked in the shown vertical arrangement to assemble the module MDL.

This module MDL is fixed in its entirety by claws CL and hooks FK which are formed on the shield case SHD.

The middle frame MFR is frame-shaped to have an opening corresponding to the liquid crystal window LCW, which is formed with not only corrugations according to shapes and thicknesses of the scattering board SPB, the back light supporter and the various circuit parts but also openings for thermal radiations.

The lower case LCA acts as a reflector of the back light, too, and is formed with reflecting mountains RM corresponding to the fluorescent lamps BL so that it may effect efficient reflections.

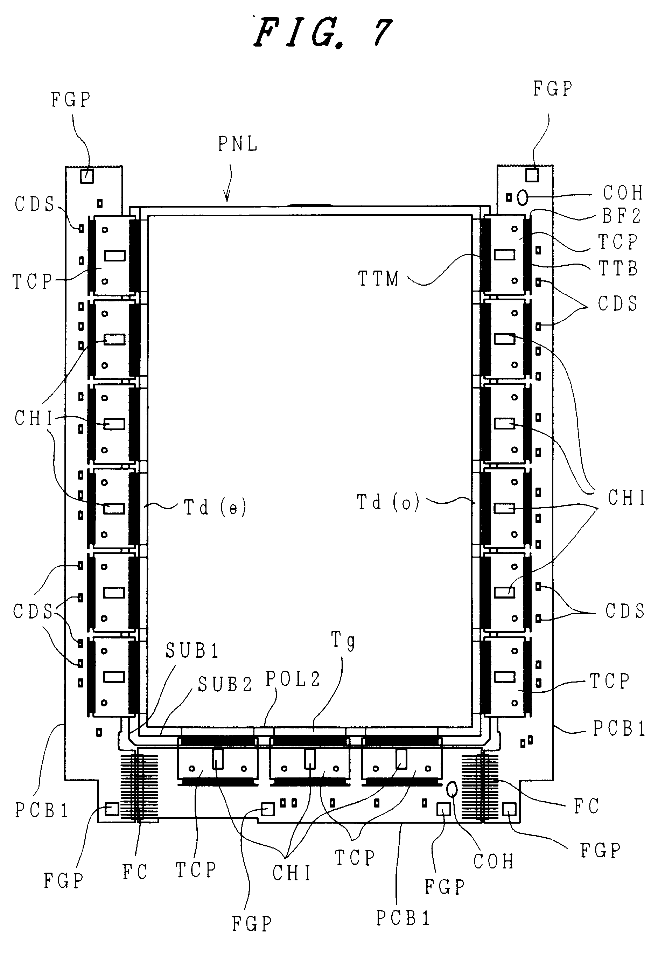

Fig. 7 is a top plan viewing showing the state in which the video signal drivers He and Ho and the vertical scanning driver V are connected with the liquid crystal panel PNL.

Letters CHI designate driver IC chips (of which the lower three are the driver chips at the side of the vertical scanning driver whereas the lefthand and righthand six are the driver chips at the side of the video signal drivers. Letters TCP designate tape carrier packages which are made by the tape automated bonding (i.e., TAB) method. Letters PCB1 designate a driver circuit board which has the aforementioned TCP and a capacitor CDS packaged therein and which is divided into three. Letters FGP designate frame ground pads, to which are soldered spring-shaped fragments FG formed by cutting the shield case SHD. Letters FC designate flat cables for connecting the lower driver circuit board PCB1 and the righthand driver circuit board PCB1 electrically. The flat cables FC used are constructing by sandwiching a plurality of lead lines (having a bronze material plated with Sn) between the striped polyethylene layer and a polyvinyl alcohol layer, as shown.

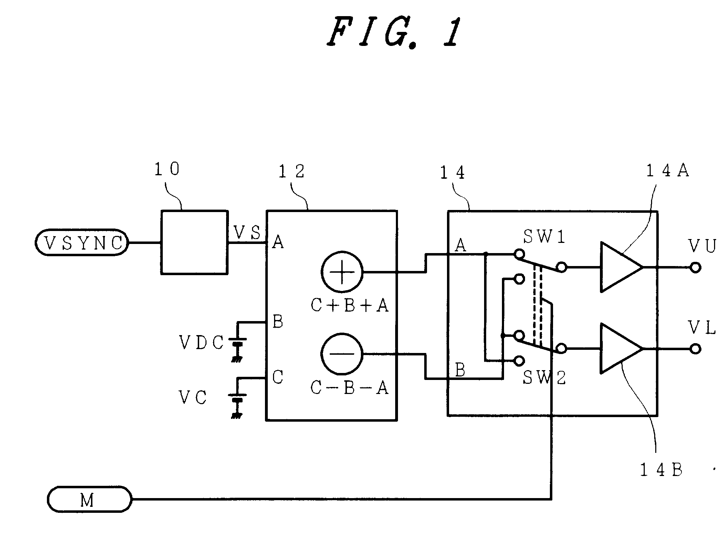

Fig. 1 is a schematic circuit diagram showing one embodiment of a liquid crystal display driver according to the present invention. This liquid crystal display driver is packaged in the driver circuit board PCB1 shown in Fig. 7.

In Fig. 1, a vertical synchronizing signal VSYNC for generating a pulse at the scanning start of one field.

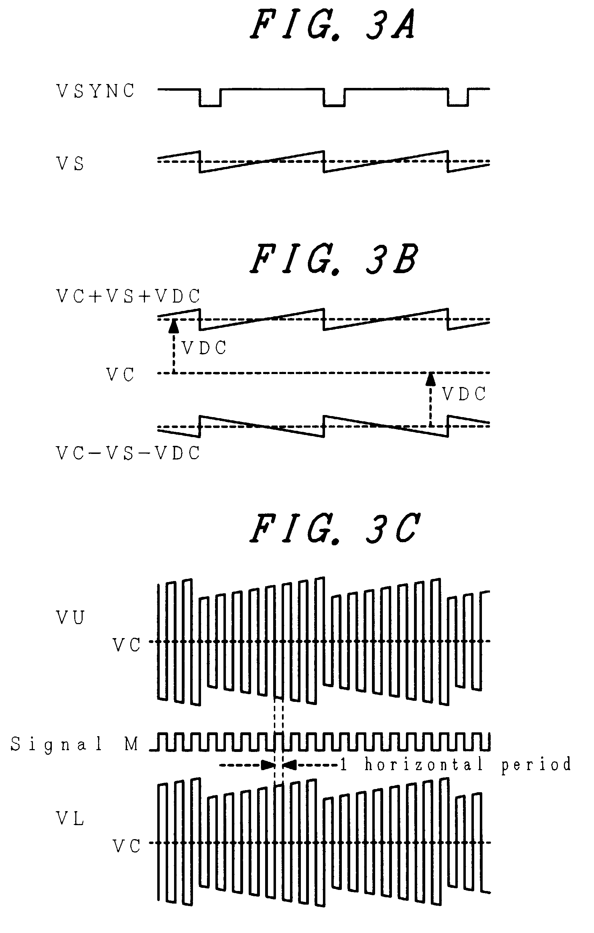

And, this signal is inputted to an angle correcting signal generator 10. This angle correcting signal generator 10 generates a viewing angle characteristic correcting signal VS in synchronism with the input signal and has such a saw-tooth waveforms, as illustrated in Fig. 3(a), for example.

Moreover, this angle correcting signal VS is inputted to an arithmetic processor 12. This arithmetic processor 12 is further fed with an amplitude voltage VDC and a central voltage VC so that it can generate two output signals by suitably adding and subtracting those voltage values and the aforementioned angle correcting signal VS.

Specifically, the signals thus generated are given the voltage values (C + B + A) and (C - B - A) if: the angle correcting signal VS has a voltage value A; the amplitude voltage VDC has a voltage value B; and the central voltage VC has a voltage value C. The signal having the voltage value (C + B + A) has a waveform, as illustrated in Fig. 3(b), and the voltage having a voltage value (C - B - A) has a waveform, as shown in Fig. 3(b). As will be apparent from Fig. 3(b), these two signals have their polarities inverted with reference to the voltage VC.

After this, these signals are individually inputted to a chopping circuit 14. This chopping circuit 14 is equipped with two switches SW1 and SW2 which are associated by an AC conversion signal M.

Specifically, this AC conversion signal M has its voltage value changing with every scanning lines so that the aforementioned individual switches SW1 and SW2 are alternately switched.

As a result, the signals having the voltage values (C + B+ A) and (C - B - A) are alternately mixed in response to the alternate switching of the switch SW1 for every scanning lines so that a signal VU is generated through a buffer 14A.

At the same time, on the other hand, the switch SW2 is also alternately switched for every scanning lines so that the signals having the voltage values (C + B+ A) and (C - B - A) are alternately mixed in response to the alternate switching, to generate a signal VL through a buffer 14B.

As a result, the above-specified signals VU and VL take the individual waveforms, as illustrated in Fig. 3(c). As will be apparent from this Figure, these individual signals have their waves formed to correct the viewing angle as a whole and their polarities inverted for every scanning lines (as responds to the change in the M signal).

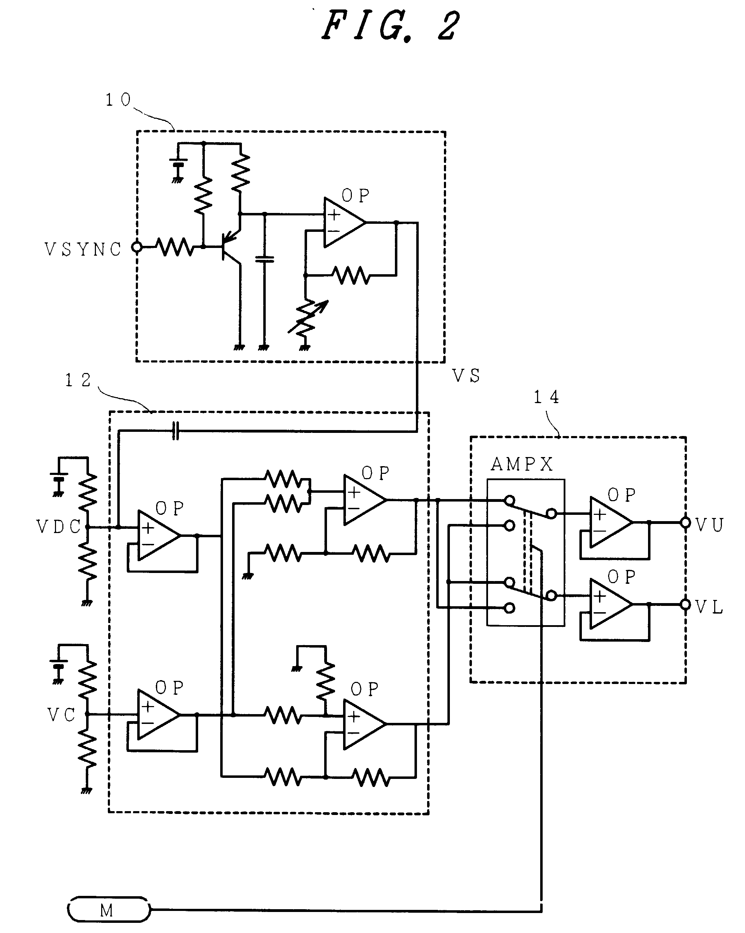

Incidentally, a more specific construction of the circuit shown in Fig. 1 is exemplified in Fig. 2.

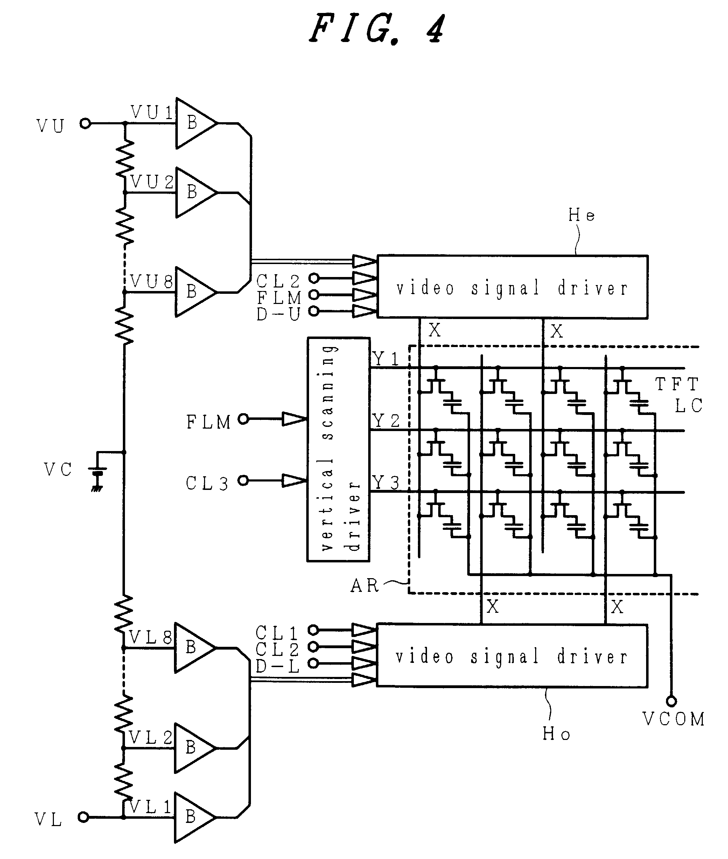

After this, the signal VU is divided, as shown in Fig. 4, so that the divided signals are separately inputted through current buffers B to the video signal driver He. In the case of this embodiment, said division is made at stages to generate signals having eight gradations of density.

These individual signals having the gradations are selected by a gradation voltage select signal D-U to be inputted to the video signal driver He, so that the selected signals are inputted to the individual vide signal lines X of the liquid crystal panel PNL.

Like the aforementioned signal VU, the signal VL also has its voltage divided by resistors, so that the divided signals are separately inputted through the current buffers B to toe video signal driver Ho.

Moreover, these individual signals having the gradations are selected by a gradation voltage select signal D-L to be inputted to the video signal driver Ho, so that the selected signals are inputted to the individual vide signal lines X of the liquid crystal panel PNL.

The liquid crystal display driver thus constructed according to the embodiment generates the viewing angle correcting signal at first on the basis of the vertical synchronizing signal which is generated by the pulse at the scanning start of one field.

As a result, even if said viewing angle correcting signal is then converted into an AC signal, this AC signal can function as it is without deteriorating the viewing angle correcting function.

Thus, the display characteristics such as the flicker in the display screen or the crosstalk to be caused vertically of the screen can be improved while correcting the viewing angle characteristics by effecting said AC conversion with the polarity change for every scanning lines.

From these effects, the viewing angle characteristics can be corrected by premising that the polarities of the voltages to be applied to the liquid crystal are changed for every scanning lines.

Although the foregoing embodiments have been described with the assumption that the viewing angle correcting signal has a saw-tooth waveform, the angle correcting signal should not be limited thereto but can naturally take an arbitrary waveform.

Although the signals VU and VL have the different polarities in the foregoing embodiments, the polarity relation should not always be limited thereto. Those individual signals VU and VL may have identical polarities for the individual scanning lines. In this modification, however, the polarity of the signals VU and VL used in the previous frame scan have to change from that of the signals VU and VL to be used.

As has been apparent from the description thus far made, according to the liquid crystal display driver of the present invention, the viewing angle characteristics can be corrected while premising that the polarities of the voltages to be applied to the liquid crystal are changed for every scanning lines.

## Claims

1. A liquid crystal display having a viewing angle correcting function, comprising:
means (10) for generating a viewing angle correcting signal (VS) on the basis of a vertical scanning signal (VSYNC) which is generated by a pulse at the scanning start of one field;
arithmetic means (12) capacity-coupled to said viewing angle correcting signal generating means (10), for generating a plurality of kinds of reference voltages (VC+VS+VDC, VC-VS-VDC) around a predetermined central voltage (VC) by correcting a predetermined amplitude voltage (VDC) with said viewing angle correcting signal (VS);
means (14) for generating two kinds of viewing angle correcting reference signals (VU, VL) having their polarities inverted from each other, from the plurality of reference voltages outputted by said arithmetic means and an alternating signal (11); and
means (B, VC, He, Ho) for generating a video signal (X) from said viewing angle correcting reference voltages.

2. A liquid crystal display having a viewing angle correcting function according to claim 1,
wherein said viewing angle correcting reference signal generating means includes two switches (SW1, SW2) and has a function to switch said switches in response to said alternating signal (11).

3. A liquid crystal display having a viewing angle correcting function according to claim 1,
wherein said viewing angle correcting reference voltage includes a chopping circuit (14).

4. A liquid crysal display having a viewing angle correcting function according to claim 1,
where said viewing angle correcting reference voltage video signal generating means includes: a plurality of voltage dividing resistors; a plurality of current buffers (B); a first video signal driver (Ho) for driving odd column signals; and a second video signal driver (He) for driving even column signals.

## Patentansprüche

1. Flüssigkristallanzeige mit einer Blickwinkelkorrekturfunktion, die umfaßt:
eine Vorrichtung (10) zum Erzeugen eines Blickwinkelkorrektursignals (VS) in Abhängigkeit von dem vertikalen Abtastsignal (VSYNC), welches durch einen Puls beim Abtastbeginn bei einem Feld erzeugt wird;
eine Arithmetikvorrichtung (12), die kapazitiv mit der Blickwinkelkorrektursignalgeneratorvorrichtung (10) gekoppelt ist, zum Erzeugen mehrerer Arten von Referenzspannungen (VC+VS+VDC, VC-VS-VDC) um eine vorgegebene zentrale Spannung (VC) durch Korrigieren einer vorgegebenen Amplitudenspannung (VDC) mit dem Blickwinkelkorrektursignal (VS);
eine Vorrichtung (14) zum Erzeugen zweier Arten von Blickwinkelkorrekturreferenzsignalen (VU, VL), deren Polaritäten einander gegenüber invertiert sind, aus den mehreren Referenzspannungen, die durch die Arithmetikvorrichtung ausgegeben werden, und aus einem alternierenden Signal (11), und
eine Vorrichtung (B, VC, He, Ho) zum Erzeugen eines Videosignals (X) aus den Blickwinkelkorrekturreferenzspannungen.

2. Flüssigkristallanzeige mit einer Blickwinkelkorrekturfunktion nach Anspruch 1,
bei der die Blickwinkellkorrekturreferenzsignalgeneratorvorrichtung zwei Schalter (SW1, SW2) umfaßt und die Funktion hat, die Schalter in Abhängigkeit von dem alternierenden Signal (11) zu schalten.

3. Flüssigkristallanzeige mit einer Blickwinkelkorrekturfunktion nach Anspruch 1,
bei der die Blickwinkelkorrekturreferenzspannung einen Chopper-Schaltkreis (14) umfaßt.

4. Flüssigkristallanzeige mit einer Blickwinkelkorrekturfunktion nach Anspruch 1,
bei der die Blickwinkelkorrekturreferenzspannungsvideosignalgeneratorvorrichtung umfaßt: mehrere Spannungsteilerwiderstände, mehrere Strompuffer (B), einen ersten Videosignaltreiber (Ho) zum Treiben ungerader Spaltensignale und einen zweiten Videosignaltreiber (He) zum Treiben gerader Spaltensignale.

## Revendications

1. Affichage à cristaux liquides ayant une fonction de correction d'angle d'observation, comportant :
des moyens (10) pour produire un signal de correction d'angle d'observation (VS) sur la base d'un signal de balayage vertical (VSYNC) qui est produit par une impulsion au début du balayage d'une trame,
des moyens arithmétiques (12) reliés par l'intermédiaire d'une capacité auxdits moyens (10) de production de signal de correction d'angle d'observation, pour produire plusieurs types de tensions de référence (VC + VS + VDC, VC - VS - VDC) autour d'une tension centrale prédéterminée (VC) en corrigeant une tension ayant une amplitude prédéterminée (VDC) à l'aide dudit signal de correction d'angle d'observation (VS),
des moyens (14) pour produire deux types de signaux de référence de correction d'angle d'observation (VU, VL) ayant leurs polarités inversées l'une par rapport à l'autre, à partir des plusieurs tensions de référence émises par lesdits moyens arithmétiques et d'un signal alternant (11), et
des moyens (B, VC, He, Ho) pour produire un signal vidéo (X) à partir desdites tensions de référence de correction d'angle d'observation.

2. Affichage à cristaux liquides ayant une fonction de correction d'angle d'observation selon la revendication 1,
dans lequel lesdits moyens de production de signaux de référence de correction d'angle d'observation comportent deux commutateurs (SW1, SW2) et ont une fonction consistant à commuter lesdits commutateurs en réponse audit signal alternant (11).

3. Affichage à cristaux liquides ayant une fonction de correction d'angle d'observation selon la revendication 1,
dans lequel lesdits moyens de production de signaux de référence de correction d'angle d'observation comportent un circuit de découpage (14).

4. Affichage à cristaux liquides ayant une fonction de correction d'angle d'observation selon la revendication 1,
dans lequel lesdits moyens de production de signal vidéo de tension de référence de correction d'angle d'observation comportent : plusieurs résistances de division de tension, plusieurs circuits tampons de courant (B), une première commande de signaux vidéo (Ho) pour commander les signaux de colonnes impaires, et une seconde commande de signaux vidéo (He) pour commander les signaux de colonnes paires.
